(19) Europäisches Patentamt
European Patent Office
Office européen des brevets

(11) Veröffentlichungsnummer: **0 093 418**
**B2**

# (12) NEUE EUROPÄISCHE PATENTSCHRIFT

(45) Veröffentlichungstag der neuen Patentschrift: **25.01.89**

(51) Int. Cl.⁴: **C 07 F 9/52**

(21) Anmeldenummer: **83104193.4**

(22) Anmeldetag: **29.04.83**

## (54) Verfahren zur Herstellung von Dichlor-phenyl-phosphan.

(30) Priorität: **03.05.82 DE 3216380**

(43) Veröffentlichungstag der Anmeldung: **09.11.83 Patentblatt 83/45**

(45) Bekanntmachung des Hinweises auf die Patenterteilung: **06.11.85 Patentblatt 85/45**

(45) Bekanntmachung des Hinweises auf die Entscheidung über den Einspruch: **25.01.89 Patentblatt 89/4**

(84) Benannte Vertragsstaaten: **AT BE CH DE FR GB IT LI NL SE**

(56) Entgegenhaltungen:
**GB-A-916 131**
**US-A-3 078 304**
**US-A-3 094 559**
**ZEITSCHRIFT FÜR ANORGANISCHE UND ALLGEMEINE CHEMIE, Band 376, August 1970, Heft 1, Seiten 37-43, Johann Ambrosius Barth, Leipzig, DD. K. SOMMER: "Zur Spaltung tertiärer Phosphine. I"**
**CHEMICAL ABSTRACTS, Band 68, Nr. 3, 15. Januar 1968, Seite 1260, Nr. 13072d, Columbus, Ohio, USA N.KL. BLIZNYUK et al.: "A direct synthesis of alkyl(or aryl)dichloro- and -dibromophospines"**
**Berichte der Deutschen Chemischen Gesellschaft, Band 21, (1888), Seiten 1505-1515**
**Methoden der Organischen Chemie (Houben-Weyl), Band XII/1, 1963), Seite 205**
**Chem. Abs. 44: 5832c-g**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr., Altkönigstrasse 11a, D-6242 Kronberg/Taunus (DE)**



LIBER, STOCKHOLM 1989

**Beschreibung**

Dichlor-phenyl-phosphan $C_6H_5PCl_2$ ist hauptsächlich ein wertvolles Zwischenprodukt auf verschiedenen Sachgebieten wie z. B. auf dem Pflanzenschutz- und Polymerensektor. Ausgehend von Dichlor-phenyl-phosphan kommt man beispielsweise auf dem Weg über das Phenylthiophosphonsäuredichlorid $C_6H_5P(S)Cl_2$ zu verschiedenen Pflanzenschutzmitteln. Die aus Dichlorphenyl-phosphan durch Hydrolvse erhältliche benzolphosphonige Säure $C_6H_5P(O)(OH)H$ ist als solche oder in Form ihrer Salze als Stabilisator für Polyamide von erheblicher wirtschaftlicher Bedeutung.

Zur Herstellung des Dichlor-phenyl-phosphans ist eine Reihe verschiedener Methoden bekannt. Eine solche ist z. B. beschrieben von K. Sommer auf S. 39 der Zeitschrift für Anorganische und Allgemeine Chemie 376 (1970): die Methode besteht in der Umsetzung von Triphenylphosphan $(C_6H_5)_3P$ und Phosphortrichlorid $PCl_3$ bei Temperaturen um 280 C unter Druck, wobei allerdings keine näheren Angaben über den Druck und etwa auch die Reaktionszeit gemacht sind. Bei einem Einsatz der Ausgangsstoffe im Verhänis - gemeint ist wohl das Molverhältnis- 1 : 1 sollen sich nach der Reaktionsgleichung:

$$(C_6H_5)_3P + PCl_3 \rightarrow C_6H_5PCl_2 + (C_6H_5)_3PCl$$

ungefähr gleiche Mengen - gemeint sind wohl gleiche molare Mengen - Dichlor-phenyl-phosphan $C_6H_5PCl_2$ und Chlor-diphenyl-phosphan $(C_6H_5)_2PCl$ bilden.

Die Reaktionsprodukte lassen sich wegen ihrer unterschiedlichen Siedepunkte durch Destillation trennen. Etwa bei 26.6 Pa liegt der Siedepunkt des Dichlor-phenyl-phosphans bei 56 - 58° C, derjenige des Chlordiphenyl-phosphans bei 115 bis 120° C.

Durch Zugabe von wenig Aluminiumchlorid $AlCl_3$ soll sich das Gleichgewicht zugunsten des Dichlor-phenyl-phosphans verschieben und die Ausbeuten von Chlor-diphenyl-phosphan sollen unter 10 % sinken. Wenn man bei dieser Arbeitsweise das Molverhältnis der Ausgangsstoffe Triphenylphosphan und Phosphortrichlorid gleich 1 : 3 wählt, soll ausschliesslich Dichlor-phenylphosphan (neben unverbrauchtem $PCl_3$) erhalten werden.

Für diese ausschliesslich zum Dichlor-phenylphosphan führende Variante der Methode von K. Sommer ist jedoch die Notwendigkeit des Einsatzes eines Katalvsators (AG)) von gewissem Nachteil.

Ohne den Zusatz von $AlCl_3$ wird aber - wie eigene Versuche (bei ca. 280° C unter autogenem Druck und einer Reaktionszeit von ca. 6 Stunden) ergeben haben - auch mit einem erheblichen Überschuss von Phosphortrichlorid praktisch keina Umsetzung erzielt. Bei einem Molverhältnis der Ausgangsstoffe Triphenylphosphan und Phosphotrichlorid von 1 : 3,82 besteht das in minimaler menge erhaltene Reaktionsprodukt aus etwa gleichen molaren Mengen an Dichlor-phenyl-phosphan und Chlor-phenyl-phosphan. Der Überschucs des einen Reaktionspartners ($PCl_3$) scheint hier also auf das Verhältnis der beiden vorerwähnten Endstoffe so gut wie keinen Einfluss zu haben.

Das in den eigenen Versuchen festgestellte Ausbleiben einer nennenswerten Umsetzung von Triphenylphosphan mit Phosphortrichlorid bei ca. 280° C unter autogenem Druck in ca. 6 Stunden Reaktionszeit steht im übrigen auch im Einklang mit einer älteren Veröffentlichung (S. 303 des auf S. 295 von Liebigs Annalen der Chemie 229 [1885] beginnenden Artikels von Michaelis und von Soden), wonach durch Erhitzen von Triphenylphosphan mit Phosphortrichlorid auf 290 - 310 °C im Bombenrohr kein Chlor-phenyl-phosphan erhalten wurde.

Nach dem Verfahren der gleichzeitig engereichten Patentanmeldung EP-A-1 Nr. 83 104 195.9 ist es nun möglich, Tripherylphosphan und Phosphortrichlorid ohne Zusatz eines Katalysators bei Temperaturen von 320 - 700° C mit hohen Ausbeuten zu Dichlor-phenyl-phosphan und Chlordipheyvl-phosphan umzusetzen: im Temperatur bereich von 320 - 500° C wird dabei Vorzugsweise unter erhöhtem Druck - insbesondere unter autogenem Druck -, im Temperaturbereich von 500 - 700° C vorzugsweise unter Normaldruck gearbeitet. Durch diese Verfahrensweise gelingt es, durch einen Überschuss des einen ($[C_6H_5]_3P$) oder des anderen ($PCl_3$) Ausgangsstoffs von den möglichen Endprodukten überwiegend das eine (Chlordiphenyl-phosphan) oder das andere (Dichlor-Phenyl-phosphan) zu erhalten. Bei einem nicht zu hohen überschuss eines Ausgangsstoffs erhält man jedoch immer Gemische der beiden Endprodukte, im Falle eines nicht zu hohen Überschusses z. B. des $PCl_3$ also ein Gemisch aus hauptsächlich Dichlor-phenyl-phosphan und einer geringeren - aber nicht unwesentlichen - Menge Chlor-diphe-nyl-phosphan.

Aus den Berichten der Deutschen Chemischen Gesellschaft, Band 21 (1888) S. 1505 ff ist es bekannt, Dichlorphenylphosphan im zugeschmolzenen Rohr mindestens 96 bis 120 Stunden lang auf 300° C zu erhitzen. Dabei soll das Diphenylchlorphosphan in einer relativ geringen Ausbeute neben Phosphortrichlorid gebildet werden.

Eine ähnliche Arbeitsweise wie in den Berichten wird in den Chemical Abstracts 44 : 5832c - g beschrieben. Danach wird beim Erhitzen von Dichlorphenylphosphan während 8 Stunden in einem geschlossenen Rohr auf 300° C Diphenylchlorphosphan in einer Ausbeute von 36 % erhalten.

Aus der US-PS 3 094 559 ist ein Verfahren zur Rerstellung von Diphenylchlorphosphan durch Pyrolyse von Dichlorphenylphosphan unter Druck und im geschlossenen Gefäß bekannt. Im Zusammenhang mit der Beschreibung des Standes der Technik heißt es dort, eine Arbeitsweise zur Rerstellung von

Diphenylchlorphosphan bestehe darin, daß das Erhitzen von Dichlorphenylphosphan unter Druck in einem geschlossenen Gefäß zu einer "im wesentlichen (substantially) reversiblen Disproportionierungs-Reaktion führe mit nur etwa 30 % der Ausbeute am gewünschten Produkt" (Spalte 1/18 bis 22). Diese Arbeitsweise soll nach der Entgegenhaltung dahingehend verbessert werden, daß man eine unkontrollierte Pyrolyse des Dichlorphenylphosphans durch Anwendung kontrollierter Temperatur- und Pyrolysebedingungen vermeidet. Zwar heißt es an der angegebenen Stelle, die Disproportionierungs-Reaktion sei "im wesentlichen reversibel". Die wahre Bedeutung des Begriffs "im wesentlichen" ergibt sich aber aus verschiedenen Stellen dieser Patentschrift. So wurde dort unter laufendem Abführen des Phosphortrichlorids aus dem Reaktionsraum zunächst ein schwarzer flüssiger Rückstand erhalten, der das gewünschte Diphenylchlorphosphan und unumgesetztes Dichlorphenylphosphan enthielt. Diese Flüssigkeit wurde dann bei 1 bis 3 mm Hg in vier Fraktionen und einen Rückstand zerlegt. Insgesamt wurden 27,5 % Nebenprodukte mit mehr oder weniger unbekannter Konstitution und 72,5 % einer Fraktion erhalten, aus der sich zu 95 % reines Diphenylchlorphosphan gewinnen ließ.

Die vorgenannten Ergebnisse wurden dadurch bewirkt, daß nicht nur das gebildete Phosphortrichlorid sogleich aus der Reaktionszone entfernt und getrennt abgeführt wurde, sondern auch dadurch, daß durch eine sehr genaue Temperaturführung darauf geachtet wurde, daß die Temperatur des Reaktionsgutes außerhalb der Pyrolysezone nicht über 300° C stieg.

In den Chemical Abstracts 60 : 13 072 d wird angegeben, daß das nach einem dort beschriebenen Verfahren unter Verwendung von weißem Phosphor erhältliche $R_2PX$ (R = Alkyl oder Aryl und X = Chlor oder Brom) mit $PX_3$ in einer reversiblen Reaktion reagiere. Die Ausbeuten für die Rerstellung von Dichlorphenylphosphan werden mit 54,6 % in Gegenwart von 1 Mol-% Jod als Katalysator und in Abwesenheit des Katalysators mit 47 % angegeben, sind also deutlich niedriger als gemäß der US-PS 3 094 559.

In dem Bestreben, auch das Chlor-diphenylphosphan ohne Verwendung eines Katalysators in Dichlor-phenyl-phosphan umwandeln, wurde nun gefunden, dass dies durch Umsetzung des Chlor-diphenyl-phosphans mit Phosphortrichlorid bei Temperaturen zwischen 350 und 500° C bzw. 500 - 700° C möglich ist. Auf diese Weise lässt sich das nach der katalysatorfreien Umsetzung von Triphenylphosphan mit Fhosphortrichlorid ohne einen zu hohen Überschuss an Phosphortrichlorid erhaltene Gemisch aus hauptsächlich Dichlorphenyl-phosphan und weniger Chlordiphenylphosphanpraktisch vollständig in das gewünschte Dichlorphenyl-phosphan umwandeln. Natürlich kann das Verfahren auch auf anderweitig verfügbares Chlor-diphenyl-phosphan angewandt werden.

Erfindungsgegenstand ist somit ein Verfahren zur Herstellung von Dichlor-phenyl-phosphan ($C_6H_5PCl_2$) durch Umsetzung einer Phenyl-phosphor-verbindung mit Rhosphortrichlorid bei erhöhter Temperatur, das dadurch gekennzeichnet ist, dass man als Phenyl-phosphor-verbindung Chlor-diphenylphosphan verwendet und die Umsetzung in Abwenheit von Katalysatoren entueder bei Temperaturen zwischen 350 und 500° C, vorzugsweise 400° C, und Überdruck, inbesondere unter autogenem (Über-)Druck, oder bei Temperaturen zwischen 500 und 700° C, vorzugsweise zwischen 550 und 620° C bei Atmosphärendruck durchführt.

Dierser Umsetzung liegt die folgende Reaktionsgleichung zugrunde:

$$(C_6H_5)_2PCl + PCl_3 \rightarrow 2C_6H_5PCl_2$$

Das Gelingen der Reaktion in dem angegebenen Temperaturbereich war ausserordentlich überraschend, weil nämlich nach Houben-Weyl, Methoden der Organischen Chemie, Band XII/1. S. 205 (1963) bei 300° C/Überdruck nur die umgekehrte Reaktion (Disproportionierung des Dichlor-phenylphosphans) ablaufen soll:

$$2C_6H_5PCl_2 \rightarrow (C_6H_5)_2PCl + PCl)$$

Bei Temperaturen zwischen 350 und 500° C wird vorzugsweise in einem geschlossenen Gefäss unter Überdruck, insbesondere unter dem sich bei der gewählten Temperatur einstellenden autogenen Überdruck (in der Regel zwischen 5 und 50 bar) gearbeitet.

Bevorzugte Temperaturen liegen hier zwischen 350 und 400° C, insbesondere zwischen 350 und 370° C.

Die Reaktionszeiten betragen in diesem Fall 10 Minuten bis 12 Stunden, wobei die kürzere Reaktionszeit bei den höheren Temperaturen und die längere Reaktionszeit bei den niedrigeren Temperaturengilt.

Wenn man zwischen 500 uni 700° C arbeitet, bewegen sich die Reaktionszeiten in der Größenordnung von Sekunden.

Das Molverhältnis für Ausgangsstoffe Chlordiphenyl-phosphan und phosphortrichlorid beträgt zweckmässig 1 zu mindestens etwa 1, bevorzugt 1 zu etwa 2 - 4.

Bei 350 bis 500° C wird das erfindungsgem. Verfahren vorteilhaft so durchgeführt, dass Chlordiphenyl-phosphan und - möglichst frisch destilliertes - Phosphortrichlorid in dem vorerwähnten Molverhältnis in einem geeigneten Autoklaven oder Druckrohr bei dem sich einstellenden autogenen Druck etwa 10 Minuten bis 12 Stunden gehaltenwerden.

Nach beendeter Umsetzung wird destillativ aufgearbeitet.

Bei 500 bis 700° C wird zweckmässig so

gearbetet, dass man das Chlor-diphenyl-phosphan/ Phosphortrichlorid-Gemisch mit Hilfe einer Dosiervorrichtung in eine geheizte Reaktionszone (z. B. ein elektrisch geheiztes Rohr) eindosiert: das aus der Reaktionszone austretende Reaktionsgemisch wird dann destillativ gereinigt. Bei dieser Verfahrensweise kann es zweckmässig sein, im Gasstrom zu arbeiten, wobei als Gase z. B. Stickstoff, Argon, aber auch Chlorwasserstoff in Frage kommen.

Sowohl die Verfahrensweise bei 350 - 500° C als auch diejenige bei 500 - 700° C (insbesondere aber die letztere) eignen sich für eine kontinuierliche Fahrweise.

Nach der Erfindung können bei Umzätzen über etwa 75 % hohe bis nahezu quantitative Ausbeuten an Dichlor-phenyl-phosphan, bezogen auf das eingesetzte Chlor-diphenyl-phosphan, erhalten werden. Wegen dieser günstigen Möglichkeit der katalysatorenfreien Umwandlung von Chlor-diphenylphosphan in Dichlor-phenyl-phosphan stellt die Erfindung einen erheblichen Fortschritt auf diesem Gebiet dar.

Die Erfindung wird nun durch die nachfolgenden Beispiele 1 - 3 näher erläutert. Nach den Beispielen 1 - 3 folgt dann noch ein Vergleichsbeispiel zum Stand der Technik gemäss K. Sommer a.a.O., welches zeigt, dass bei ca. 280° C unter autogenem Druck in ca. 6 stündiger Reaktionszeit ohne Katalysatorzusatz nur eine minimale Umsetzung von Triphenylphosphan und Phosphortrichlorid erfolgt.

## A) Beispiele

### Beispiel 1

20 g (= 0,091 Mol) Chlor-diphenyl-phosphan und 40 g (0,291 Mol) frisch destilliertes Phosphortrichlorid werden in einem Bombenrohr mit einem Volumen von 90 ml 6 Stunden bei 350° C gehalten. Dann wird destilliert. Man erhält 28 g (= 0,157 Mol) Dichlor-phenyl-phosphan (Kp: 56 - 58° C/26.6 Pa) und 0,5g (= 0,00227 Mol) Chlordiphenyl-phosphan (Kp: 115 - 120° C/26.6 Pa). Das überschüssige Phosphortrichlorid sammelt sich in der der Ölpumpe vorgeschalteten Kühlfalle. Die Ausbeute an Dichlor-phenyl-phosphan beträgt 86 % d.Th. oder, bezogen auf umgesetztes Chlotdiphenylphosphan, 89 %.

### Beispiel 2 (nicht erfindungsgemäß)

20g (0,091 Mol) Chlor-diphenyl-phosphan und 40 g (= 0,291 Mol) frisch destilliertes Phosphortrichlorid werden in einem Bombenrohr mit einem Volumen von 90 ml 11 Stunden bei 290 - 300° C gehalten. Dann wird destilliert. Man erhält 13g (= 0,0726 Mol) Dichlor-phenyl-phosphan und 11 g (= 0,05 Mol) Chlor-diphenyl-phosphan. Das überschüssige Phosphortrichlorid sammelt sich in der der Ölpumpe vorgeschalteten Kühlfalle an. Die Ausbeute beträgt 89 % d.Th. bei einem Umsatz von 45 % d.Th. Chlor-diphenyl-phosphan.

### Beispiel 3

Eine Mischung von 40 g (= 0,182 Mol) Chlordiphenyl-phosphan und 80 g (= 0,582 Mol) frisch destilliertem Phosphortrichlorid wird während 45 Minuten eingetropft in ein schwach schräg geneigtes, 60 cm langes, mit Quarz-Raschig ringen von 6 mm Durchmesser gefülltes, mit Stickstoff gespültes Quarzrohr, das sich in einem auf 620° C geheizten elektrischen Ofen befindet. Das in der Vorlage sich sammelnde Reaktionsgemisch wird destilliert. Man erhält 48 g (= 0,268 Mol) Dichlorphenyl-phosphan, 10 g (= 0,0454 Mol) Chlordiphenyl-phosphan und nicht umgesetztes Phosphortrichlorid. Die Ausbeute an Dichlor-phenylpnospnan beträgt ca. 98 % d.Th. bei einem Umsatz von 75 % d.Th.

## B) Vergleichsbeispiel

20 g (= 0,076 Mol) Triphenylphosphan und 40g (= 0,291 Mol) frisch destilliertes Phosphortrichlorid (Molverhältnis 1 : 3,82) werden in einem Bombenrohr mit einem Volumen von ca. 90 ml etwa 6 Stunden bei 280° C gehalten. Anschliessend wird destilliert. Man erhält neben nicht umgesetztem Triphenylphosphan und Phosphortrichlorid ca. 300 mg (= 1,68 mMol) Dichlorphenyl-phosphan und ca. 350 mg (= 1,59 mMol) Chlor-diphenyl-phosphan (Molverhältnis 1,06 : 1; Gewichtsangaben aufgrund einer gaschromatographischen Analyse eines Rohdestillates). Der Umsatz beträgt an Dichlor-phenyl-phosphan und Chlordiphenylphosphan etwa 2 %.

## Patentansprüche

1. Verfahren zur Herstellung von Dichlorphenylphosphan $C_6H_5PCl_2$ durch Umsetzung einer Phenyl-phosphor-Verbindung mit Phosphortrichlorid $PCl_3$ bei erhöhter Temperatur, dadurch gekennzeichnet, daß man als Phenylphosphor-Verbindung Chlor-diphenylphosphan $(C_6H_5)_2PCl$ verwendet und die Umsetzung in Abwesenheit von Katalysatoren bei Temperaturen zwischen 350 und 500° C, vorzugsweise bis 400° C, unter Überdruck, insbesondere unter autogenem (Über-)Druck, durchführt.

2. Verfahren zur Herstellung von Dichlorphenylphosphan $C_6H_5PCl_2$ durch

Umsetzung einer Phenyl-phosphor-Verbindung mit Phosphortrichlorid $PCl_3$ bei erhöhter Temperatur, dadurch gekennzeichnet, daß man als Phenylphosphor-Verbindung Chlor-diphenylphosphan $(C_6H_5)_2PCl$ verwendet und die Umsetzung in Abwesenheit von Katalysatoren bei Atmospharendruck und Temperaturen zwischen 500 und 700° C, vorzugsweise zwischen 550 und 620° C durchführt.

3. Verfahren nach Anspruch 1 oder 2, dadurch gekennzeichnet, daß man die Ausgangsstoffe Chlor-diphenylphosphan und Phosphortrichlorid im Molverhältnis 1 zu mindestens etwa 1, vorzugsweise 1 zu etwa 2 - 4, umsetzt.

**Claims**

1. A process for preparing dichlorophenylphosphane, $C_6H_5PCl_2$, by reacting a phenyl phosphorus compound with phosphorus trichloride, $PCl_3$, at elevated temperatures, which comprises using chlorodiphenylphosphane, $(C_6H_5)_2PCl$, as the phenylphosphorus compound and carrying out the reaction in the absence of catalysts at temperatures between 350 and 500° C, preferably up to 400° C, under superatmospheric pressure, in particular under autogenous (superatmospheric) pressure.

2. A process for preparing dichlorophenylphosphane, $C_6H_5Cl_2$, by reacting a phenylphosphorus compound with phosphorus trichloride, $PCl_3$, at elevated temperatures, which comprises using chlorodiphenylphosphane, $(C_6H_5)_2PCl$, as the phenylphosphorus compound and carrying out the reaction in the absence of catalysts under atmospheric pressure and at temperatures between 500 and 700° C, preferably between 550 and 620° C.

3. The process as claimed in claim 1 or 2, wherein the starting materials chlorodiphenylphosphane and phosphorus trichloride are reacted in a molar ratio of 1 to at least about 1, preferably 1 to about 2 - 4.

**Revendications**

1. Procédé de préparation de la phényldichlorophosphine $C_6H_5PC1_2$ par réaction d'un composé phénylphosphoré avec le trichlorure de phosphore $PCl_3$, à température élevée, procédé caractérisé en ce qu'on utilise, comme composé phényl-phosphoré, la diphényl-chlorophosphine $(C_6H_5)_2PCl$ et on effectue la réaction en l'absence de catalyseurs à des températures comprises entre 350 et 500° C, de préférence à au plus 400° C, sous une surpression plus particulierement sous la pression ou surpression autogène

2. Procédé de préparation de la phényldichlorophosphine $C_6H_5PCl_2$ par réaction d'un composé phénylphosphoré avec le trichlorure de phosphore $PCl_3$ à température élevée, procédé caractérisé en ce qu'on utilise, comme composé phényl-phosphoré, la diphénylchlorophosphine $(C_6H_5)_2PCl$ et on effectue la réaction en l'absence de catalyseurs sous la pression atmosphérique et à des températures comprises entre 500 et 700° C, de préférence entre 550 et 620° C.

3. Procédé selon l'une des revendications 1 et 2, caractérisé en ce qu'on fait réagir les corps de départ, c'est-à-dire la diphénylchlorophosphine et le trichlorure de phosphore dans un rapport molaire d au plus environ 1 : 1, de préférence dans un rapport molaire compris entre environ 1 : 2 et 1 : 4.